# EUROPEAN PATENT APPLICATION

(11) **EP 4 770 207 A1**
(43) Date of publication of application: **01.07.2026**
(21) Application number: 24872960.0
(22) Date of filing: 26.09.2024
(51) Int. Cl.: H04W 48/18, H04W 52/02

(54) **METHOD AND APPARATUS FOR SELECTING NETWORK IN CONSIDERATION OF ENERGY**

(30) Priority: 26.09.2023 KR 20230129438
(71) Applicant: Samsung Electronics Co., Ltd., Suwon-si, Gyeonggi-do 16677 (KR)
(72) Inventor: SUH, Dongeun, Suwon-si, Gyeonggi-do 16677 (KR); PARK, Jungshin, Suwon-si, Gyeonggi-do 16677 (KR); LEE, Hoyeon, Suwon-si, Gyeonggi-do 16677 (KR)
(74) Representative: Gulde & Partner
(86) International application number: PCT/KR2024/014589
(87) International publication number: WO 2025/071252

(57) **Abstract**

The present disclosure provides a method and apparatus for selecting a network in consideration of energy usage in a wireless communication system. The method performed by a first network entity corresponding to an AMF in a wireless communication system, according to an embodiment of the present disclosure, may comprise the steps of: receiving UE subscription information from a second network entity corresponding to a UDM; receiving, from a UE, a request message for network energy saving (NES); determining NES activation for the UE on the basis of at least one of the UE subscription information and the request message; and transmitting NES-related information to the UE, wherein the request message may include information on whether energy saving is allowed for the UE.

## Description

### [Technical Field]

The present disclosure relates to a method and an apparatus for selecting a network in consideration of energy usage in a wireless communication system.

### [Background Art]

5th generation (5G) mobile communication technology defines a wide frequency band to enable fast transmission speed and new services, and can be implemented not only in a frequency band equal to or lower than 6 gigahertz (6GHz) ('sub 6GHz') bands, such as 3.5 gigahertz (3.5GHz), but also in ultra-high frequency band ('above 6GHz'), also known as millimeter wave (mmWave), such as 28GHz and 39GHz. In addition, 6th generation (6G) mobile communication technology, which is called a system beyond 5G, is being considered to be implemented in a terahertz band (e.g., from 95GHz to 3 terahertz (3THz) band) to achieve a transmission rate 50 times faster and an ultra low-latency time reduced to one-tenth, compared to the 5G mobile communication technology.

The goal in the early stage of the 5G mobile communication technology is to support services and meet performance requirements for enhanced mobile broadband (eMBB), ultra-reliable low-latency communications (URLLC), and massive machine-type communications (mMTC). To achieve the goal, standardization is underway for beamforming and massive MIMO to mitigate path loss of radio waves and increase a propagation range of radio waves in an ultra-high frequency band, support for various numerologies (such as an operation of multiple subcarrier spacings) and dynamic operation of slot formats for efficient utilization of ultra-high frequency resources, initial access technologies to support multi-beam transmission and broadband, definition and operation of a bandwidth part (BWP), new channel coding methods such as a low density parity check (LDPC) code for large-capacity data transmission and a polar code for high reliable transmission of control information, L2 pre-processing, network slicing to provide dedicated networks specialized to specific services, etc.

Currently, discussions are underway for improvement and performance enhancement of the initial 5G mobile communication technology in consideration of services that the 5G mobile communication technology is intended to support. Physical layer standardization is underway for technologies such as vehicle-to-everything (V2X), which assists in driving determination s of autonomous vehicles and enhances user convenience based on their own location and status information transmitted by vehicles, new radio unlicensed (NR-U), which aims for system operation meeting various regulatory requirements in unlicensed bands, NR UE power saving, a non-terrestrial network (NTN), which is direct UE-satellite communication to secure coverage in areas where communication with terrestrial networks is impossible, and positioning.

In addition, standardization of wireless interface architecture/protocol fields is also underway for technologies such as intelligent factories (industrial Internet of Things, IIoT) that support new services through integration and convergence with other industries, integrated access and backhaul (IAB) that provides nodes to extend network service area by integrating and supporting a wireless backhaul link and an access link, mobility enhancement technology including conditional handover and dual active protocol stack (DAPS) handover, and two-step random access (2-step RACH for NR) that simplifies a random access procedure, and standardization of system architecture/service fields is also underway for 5G baseline architecture (e.g., service based architecture, service based interface) for combining network functions virtualization (NFV) and software-defined networking (SDN) technologies, and mobile edge computing (MEC) that receives services based on a location of a UE, etc.

When such 5G mobile communication systems are commercialized, connected devices, experiencing explosive growth, will be linked to communication networks. Therefore, it is expected that the enhancement of the functions and performance of 5G mobile communication systems and the integrated operation of connected devices will be required. To this end, new research is scheduled to be conducted on eXtended reality (XR) to efficiently support augmented reality (AR), virtual reality (VR), mixed reality (MR), etc., enhancing 5G performance and reducing complexity by using artificial intelligence (AI) and machine learning (ML), supporting AI services, supporting metaverse services, drone communications, etc.

In addition, the advancement of the 5G mobile communication systems may provide the foundation for the development of not only 6G mobile communication technologies, including a new waveform to ensure coverage in a terahertz band, multi-antenna transmission technologies such as full-dimensional multiple-input multiple-output (FD-MIMO), array antennas, and large-scale antennas, metamaterial-based lenses and antennas to enhance coverage of a terahertz band signal, high-dimensional spatial multiplexing technology using orbital angular momentum (OAM), and reconfigurable intelligent surface (RIS) technology, but also for 6G mobile communication technologies, including full-duplex technology to enhance frequency efficiency and improve system networks, AI-based communication technologies that utilize satellites and artificial intelligence from the design stage and incorporate end-to-end AI support functions to achieve system optimization, and next-generation distributed computing technologies that utilize ultra-high-performance communication and computing resources to realize highly complex services beyond the limitations of UE computing capabilities, etc.

### [Disclosure]

### [Technical Problem]

Network operators may encounter situations where they need to reduce network energy usage, for example, to comply with energy usage regulations, cut costs caused by power consumption, etc.

The present disclosure is directed to providing a method and an apparatus for selecting a network in consideration of energy usage in order to reduce network energy usage.

### [Technical Solution]

According to an embodiment of the present disclosure, a method performed by a first network entity corresponding to an access and mobility management function (AMF) in a wireless communication system includes receiving user equipment (UE) subscription information from a second network entity corresponding to a unified data management (UDM), receiving a request message for network energy saving (NES) from a UE, determining NES activation for the UE based on at least one of the UE subscription information and the request message, and transmitting NES-related information to the UE, in which the request message includes information on whether energy saving is allowed for the UE.

According to another embodiment of the present disclosure, a method performed by a user equipment (UE) in a wireless communication system includes transmitting a request message for network energy saving (NES) to a first network entity corresponding to an access and mobility management function (AMF), and receiving NES-related information from the first network entity, in which the request message includes information on whether energy saving is allowed for the UE, and whether the NES is activated for the UE is determined based on the request message.

According to still another embodiment of the present disclosure, a first network entity corresponding to an access and mobility management function (AMF) in a wireless communication system includes a transceiver, and a controller, in which the controller is configured to receive user equipment (UE) subscription information from a second network entity corresponding to a unified data management (UDM), receive a request message for network energy saving (NES) from the UE, determine NES activation for the UE based on at least one of the UE subscription information and the request message, and transmit NES-related information to the UE, and in which the request message includes information on whether energy saving is allowed for the UE.

According to still yet another embodiment of the present disclosure, a user equipment (UE) in a wireless communication system includes a transceiver, and a controller, in which the controller is configured to transmit a request message for network energy saving (NES) to a first network entity corresponding to an access and mobility management function (AMF), and receive NES-related information from the first network entity, and in which the request message includes information on whether energy saving is allowed for the UE, and whether the NES is activated for the UE is determined based on the request message.

### [Advantageous Effect]

According to an embodiment of the present disclosure, a network operator may obtain a network energy saving effect by allowing an energy saving-activated UE(s) to receive services via low-energy-consuming network slices.

Effects which may be achieved by the present disclosure are not limited to the effects described in various embodiments. That is, other effects that are not mentioned may be obviously understood by those skilled in the art to which the present disclosure pertains from the following description.

### [Description of Drawings]

FIG. 1 illustrates 5G system architecture according to an embodiment of the present disclosure.
FIG. 2 illustrates a method for providing Allowed NSSAI according to a network energy saving (NES) status in a registration procedure according to an embodiment of the present disclosure.
FIG. 3 illustrates a method for providing Allowed NSSAI in a UE configuration information update procedure according to a change in NES status according to an embodiment of the present disclosure.
FIG. 4 illustrates a method for deriving and providing NSAG priority in consideration of a NES status in a registration procedure according to an embodiment of the present disclosure.
FIG. 5 illustrates a method for providing NSAG priority in a UE configuration information update procedure based on the change in NES status according to an embodiment of the present disclosure.
FIG. 6 illustrates a method for providing an enhanced UE route selection policy (URSP) rule in a UE registration procedure according to an embodiment of the present disclosure.
FIG. 7 illustrates a method for transmitting NES status to a UE configured with an enhanced URSP rule in a UE configuration update procedure according to an embodiment of the present disclosure.
FIG. 8 is a block diagram illustrating a structure of a terminal according to an embodiment of the present disclosure.
FIG. 9 is a diagram illustrating a structure of a network entity performing a network function according to an embodiment of the present disclosure.

### [Mode for Disclosure]

Hereinafter, embodiments of the present disclosure will be described in detail with reference to the accompanying drawings.

In describing the embodiments, descriptions of technical contents that are well known in the technical field to which the present disclosure pertains and are not directly related to the present disclosure will be omitted. This is to more clearly convey the gist of the present disclosure without ambiguity by omitting unnecessary explanations.

For the same reason, some components in the accompanying drawings are exaggerated, omitted, or schematically illustrated. In addition, the size of each component does not entirely reflect the actual size. The same reference numerals are assigned to the same or corresponding components in each drawing.

Various advantages and features of the present disclosure and methods accomplishing the same will become apparent from the following detailed description of embodiments with reference to the accompanying drawings. However, the present disclosure is not limited to embodiments to be described below, but may be implemented in various different forms, these embodiments will be provided only in order to make the present disclosure complete and allow those skilled in the art to completely recognize the scope of the present disclosure, and the present disclosure will be defined by the scope of the claims. Throughout the specification, like reference numerals denote like components. In addition, in describing the present disclosure, when it is determined that a detailed description for the functions or configurations related to the present disclosure may unnecessarily obscure the gist of the present disclosure, the detailed description thereof will be omitted. Further, the following terms are terms defined in consideration of the functions in the present disclosure and may vary depending on the intention, practice, etc., of users and operators. Therefore, the definitions thereof should be construed based on the contents throughout the specification.

In describing embodiments of the present disclosure, the present disclosure primarily targets new radio (NR), which is a radio access network, and a packet core 5G system, a 5G core network, or a next generation core (NG core), which is a core network, as specified in 5G mobile communication standards defined by the 3rd Generation Partnership Project (3GPP), which is a mobile telecommunications standardization organization. However, the main technical idea of the present disclosure may also be applied to other communication systems having similar technical backgrounds with minor modifications without significantly departing from the scope of the present disclosure, as will be readily appreciated by a person skilled in the art to which the present disclosure pertains.

Hereinafter, for convenience of description, some terms and names defined in the 3GPP standards (standards for 5G, NR, LTE, or similar systems) may be used. However, the present disclosure is not limited to the terms and names, and may be equally applied to systems conforming to other standards.

Hereinafter, terms for identifying access nodes, terms referring to network entities, terms referring to messages, terms referring to interfaces between network entities, terms referring to various pieces of identification information, and the like, used in the present disclosure are exemplified for the convenience of description. Accordingly, the terms used in the present disclosure are not limited thereto, and other terms referring to objects having equivalent technical meanings may be used.

Hereinafter, a base station is an entity that performs resource assignment of a terminal, and may be at least one of a gNode B, an eNode B, a Node B, a base station (BS), a wireless access unit, a base station controller, or a node on a network. The terminal may include user equipment (UE), a mobile station (MS), a cellular phone, a smartphone, a computer, or a multimedia system capable of performing a communication function. In the present disclosure, downlink (DL) refers to a wireless transmission path of a signal transmitted from a base station to a terminal, and uplink (UL) refers to a wireless transmission path of a signal transmitted from a terminal to a base station.

In this case, it will be appreciated that each block of processing flowcharts and combinations of the flowcharts may be executed by computer program instructions. Since these computer program instructions may be mounted in a processor of a general computer, a special computer, or other programmable data processing apparatuses, these computer program instructions executed through the processor of the computer or other programmable data processing apparatuses create means performing functions described in a block(s) of the flowchart. Since these computer program instructions may also be stored in a computer usable or computer readable memory that may be directed to a computer or other programmable data processing apparatuses in order to implement the functions in a specific scheme, the computer program instructions stored in the computer usable or computer readable memory may also produce manufacturing articles including instruction means performing the functions described in the block(s) of the flowchart. Since the computer program instructions may also be mounted on the computer or other programmable data processing apparatuses, the instructions performing a series of operation steps on the computer or other programmable data processing apparatuses to create processes executed by the computer, thereby executing the computer or other programmable data processing apparatuses may also provide steps for performing the functions described in a block(s) of the flowchart.

In addition, each block may represent some of modules, segments, or codes including one or more executable instructions for executing a specific logical function(s). Further, it is to be noted that functions mentioned in the blocks occur regardless of a sequence in some alternative embodiments. For example, two blocks that are continuously illustrated may be simultaneously performed in fact or be performed in a reverse sequence depending on corresponding functions.

The term '~unit' used in embodiments of the present disclosure means software or hardware components such as field programmable gate array (FPGA) or application specific integrated circuit (ASIC), and the '~unit' performs certain roles. However, the '~unit' is not meant to be limited to the software or hardware. The '~unit' may be configured to be stored in a storage medium that can be addressed or may be configured to reproduce one or more processors. Accordingly, as an example, the '~unit' refers to components such as software components, object-oriented software components, class components, and task components, processes, functions, attributes, procedures, subroutines, segments of program code, drivers, firmware, microcode, circuits, data, databases, data structures, tables, arrays and variables. Components and functions provided within '~unit' may be combined into a smaller number of components and '~unit' or may be further separated into additional components and '~unit.' In addition, components and '~ units' may be implemented to reproduce one or more central processing units (CPUs) in a device or a secure multimedia card. In addition, in an embodiment, the '~unit' may include one or more processors.

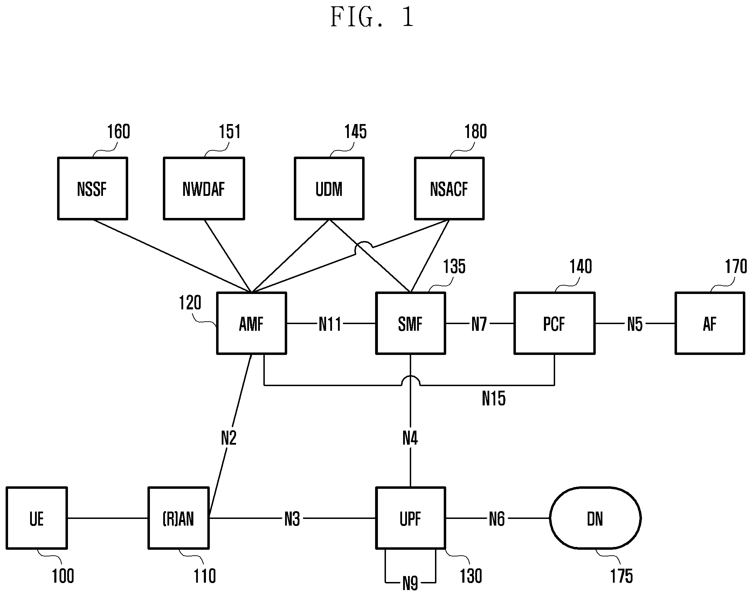

FIG. 1 illustrates 5G system architecture according to an embodiment of the present disclosure.

A 5G mobile communication network may be configured with a 5G user equipment (UE) (terminal) 100, a 5G radio access network (RAN) (base station, 5g nodeB (gNB), evolved nodeB (eNB), etc.) 110, and a 5G core network. The 5G core network may be configured with network functions (NF) that include an access and mobility management function (AMF) 120 providing a mobility management function of a UE, a session management function (SMF) 135 providing a session management function, a user plane function (UPF) 130 performing a data transfer role, a policy control function (PCF) 140 providing a policy control function, a unified data management (UDM) 145 providing a data management function such as subscriber data and policy control data, a unified data repository (UDR) storing data of various network functions (NF), etc. The 5G core network may be configured to further include NFs, such as a network slice selection function (NSSF) 160, a network data analytic function (NWDAF) 151, an application function (AF) 170, a data network (DN) 175, and a network slice admission control function (NSACF) 180, etc.

In the 3GPP system, a conceptual link connecting between NFs in the 5G system is defined as a reference point. The following illustrates the reference points included in the 5G system architecture represented in FIG. 1.
- N1: Reference point between the UE and the AMF
- N2: Reference point between the (R)AN and the AMF
- N3: Reference point between the (R)AN and the UPF
- N4: Reference point between the SMF and the UPF
- N5: Reference point between the PCF and the AF
- N6: Reference point between the UPF and the DN
- N7: Reference point between the SMF and the PCF
- N8: Reference point between the UDM and the AMF
- N9: Reference point between two core UPFs
- N10: Reference point between the UDM and the SMF
- N11: Reference point between the AMF and the SMF
- N12: Reference point between the AMF and an authentication server function (AUSF)
- N13: Reference point between the UDM and the AUSF
- N14: Reference point between two AMFs
- N15: For a non-roaming scenario, reference point between the PCF and the AMF, and for a roaming scenario, reference point between the PCF and the AMF in a visited network.

In the 5G system, a network slicing technology indicates a technology and architecture that enables multiple virtualized, independent, logical networks within a single physical network. A network operator provides services by configuring a virtual end-to-end network called a network slice to satisfy specialized requirements of services/applications. In this case, the network slice is distinguished by an identifier called single-network slice selection assistance information (S-NSSAI). The network transmits a set of allowed slices (e.g., allowed NSSAI(s)) to a UE in, for example, a UE registration procedure, and the UE transmits and receives application data via a protocol data unit (PDU) session generated through one S-NSSAI (e.g., network slice) among the received set of slices.

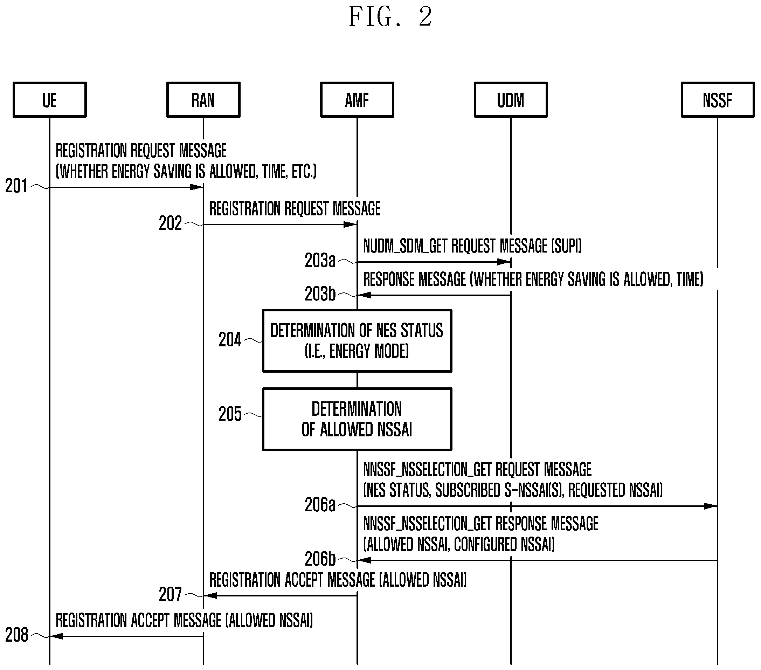

FIG. 2 illustrates a method for providing allowed NSSAI based on a network energy saving (NES) status in a registration procedure according to an embodiment of the present disclosure.

In this case, the NES status (or energy mode) may be configured to use (indicate) two stages (e.g., activated and deactivated) or two or more stages (e.g., normal mode, low energy saving, high energy saving mode, etc.) that indicate, for example, a current energy saving degree for a UE. For example, when the NES status of the UE is deactivated (or normal mode) it means that the network energy saving is not performed for the UE.

In step 201, the UE may transmit an access network (AN) message including a registration request message to the RAN. The corresponding message may include at least one of the following pieces of information:
- UE ID: Identifier information of UE. If there is an available 5G globally unique temporary identifier (5G-GUTI) assigned to the UE by a network, the UE ID may include the 5G-GUTI, and if not, a subscriber concealed identifier (SUCI) may be included;
- Requested NSSAI: It may include S-NSSAI(s) information requested by a UE.
- Energy saving (ES) allowed (or ES non-allowed) indication: It is an indicator indicating that ES is allowed (or an indicator indicating that ES is not allowed). The UE may change the ES status information to allowed when an input allowing the NES is received from a user of the UE, or when information allowing the NES is stored as configuration information in the UE. The UE may include an ES allowed or ES non-allowed indication depending on its ES status information.
- time: It may include time information (e.g., period, duration, etc.) that allows an energy saving operation for the UE. For example, it may indicate a specific time (e.g., 1 a.m. to 5 a.m.) of day, etc.; or
- UE 5G mobility management (UE 5G MM) capability: It may indicate information on the functions supported by the UE. For example, support of a network slice access stratum group (NSAG) (i.e., UE supporting cell reselection based on a network slice group, etc.) may be included. In addition, for example, support of NES may be included.

In step 202, the RAN may transmit the registration request message received from the UE to the AMF.

In step 203a, the AMF may transmit a message (e.g., a Nudm_SDM_Get request message) requesting the UE subscription information to the UDM, and in step 203b, the AMF may receive a response message including the UE subscription information from the UDM. The UE subscription information received from the UDM may include an ES allowed indication, time information, and/or subscribed S-NSSAI(s). The subscribed S-NSSAI(s) may include information on whether a default S-NSSAI is present for each S-NSSAI.

In step 204, when the registration request message received in step 202 includes the ES allowed indication or when the UE subscription information received in step 203b includes the ES allowed indication, the AMF may determine whether to perform the NES activation for the corresponding UE. When the information received in step 202 or step 203b includes the time information for the NES along with the ES allowed indication, the AMF may perform the NES activation for the corresponding UE within a time window corresponding to the corresponding time information.

When the AMF determines to activate the NES, the AMF may store information (e.g., the NES status configured to 'activated') indicating that the NES has been activated for the corresponding UE, internally or in the UE context in the AMF. For the NES-activated UE, the 5G system may perform one or more operations to reduce energy consumption for providing services to the UE(s).

In step 205, the AMF may determine the allowed NSSAI for the corresponding UE by considering one or more of whether the NES is activated for the UE (i.e., the NES status), the subscribed S-NSSAI(s), and the requested NSSAI. For example, for the NES-activated UE, the AMF may include one or more S-NSSAI(s) consuming relatively low energy on average, or include one or more S-NSSAI(s) having high energy efficiency by considering average energy consumption (or average energy efficiency) for each S-NSSAI for the allowed NSSAI to be transmitted to the UE. Alternatively, the AMF may include only the default subscribed S-NSSAI(s) in the allowed NSSAI for the corresponding UE by considering whether the NES is activated for the UE.

When the AMF does not directly determine the allowed NSSAI in step 205, in step 206a, the AMF may transmit, to the NSSF, a request message (e.g., an Nnssf_NSSelection_Get request message) including the following pieces of information to acquire the allowed NSSAI. For example, when there is an available NSSF, the AMF may transmit the request message (e.g., an Nnssf_NSSelection_Get request message) to the NSSF.

For example, the request message (e.g., an Nnssf_NSSelection_Get request message) may include the NES status, the subscribed S-NSSAI(s), or the requested NSSAI.

In step 206b, when the message received from the AMF includes the NES status, the NSSF may determine the allowed NSSAI for the corresponding UE by considering one or more of whether the NES is activated for the UE (i.e., the NES status), the subscribed S-NSSAI(s), and the requested NSSAI. For example, for the NES-activated UE, the NSSF may include one or more S-NSSAI(s) consuming relatively low energy on average, or include one or more S-NSSAI(s) having high energy efficiency by considering average energy consumption (or average energy efficiency) for each S-NSSAI for the allowed NSSAI to be transmitted to the UE. Alternatively, the NSSF may include only the default subscribed S-NSSAI(s) in the allowed NSSAI for the corresponding UE when the NES status indicates activated. The NSSF may include the S-NSSAI(s) included in the subscribed S-NSSAI(s) among the requested NSSAIs in the allowed NSSAI when the NES status indicates deactivated. The NSSF may transmit a response message (e.g., Nnssf_NSSelection _Get response message) to the AMF. The response message (e.g., Nnssf_NSSelection_Get response message) may include the allowed NSSAI and/or configured NSSAI.

In some cases, steps 206a and 206b may also be omitted.

In step 207, the AMF may transmit a registration accept message to the RAN. For example, the registration accept message may include the allowed NSSAI.

In step 208, the RAN may transmit the message (e.g., a registration accept message) received from the AMF to the UE.

When the received message includes the allowed NSSAI, the UE may store the allowed NSSAI. The UE may perform a PDU session establishment request only using the S-NSSAI(s) included in the allowed NSSAI (e.g., the PDU session establishment request may include only one of the S-NSSAIs included in the allowed NSSAI) or transmit/receive data.

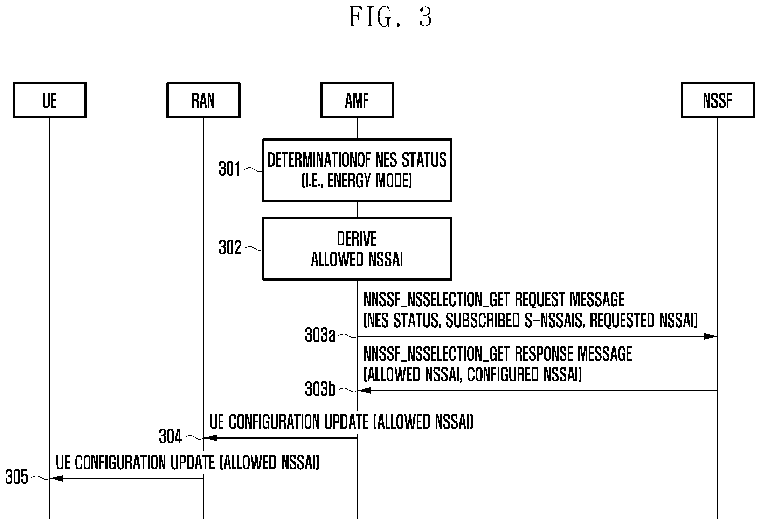

FIG. 3 illustrates a method for providing Allowed NSSAI in a UE configuration information update procedure according to a change in NES status according to an embodiment of the present disclosure.

In step 301, when the AMF receives a message (or a warning message indicating that the network energy usage is excessively high) indicating that the NES is required from at least one of operation, administration, maintenance (OAM), PCF, NWDAF, NSSF, and RAN, or when the AMF determines that the NES is directly required (e.g., determines in consideration of network energy consumption conditions), the AMF may determine the UE(s) for which the NES is to be activated. When the AMF receives, from the RAN, a message (or a warning message indicating that the network energy usage in the RAN is excessively high) indicating that the NES is required, the AMF may consider the UEs accessing the network via the corresponding RAN as targets for performing the NES activation.

The AMF may select UEs for performing the NES activation. For example, the AMF may select one or more UEs from among UEs that include the ES allowed indication in the subscription information or UEs that have provided the ES allowed indication. When the time information for the NES is included along with the ES allowed indication in the subscription information or in the message received from the UE in the registration procedure, the AMF may perform the NES activation for the corresponding UE within the time window corresponding to the corresponding time information.

When the AMF determines that the NES is activated, the AMF may store the information (e.g., the NES status configured to 'activated') indicating that the NES has been activated for the corresponding UE, internally or in the UE context in the AMF. For the NES-activated UE, the 5G system may perform one or more operations to reduce energy consumption for providing services to the UE(s).

In step 302, the AMF may determine the allowed NSSAI for the corresponding UE by considering one or more of whether the NES is activated for the UE (i.e., the NES status), the subscribed S-NSSAI(s), or the requested NSSAI. For example, for the NES-activated UE, the AMF may include one or more S-NSSAI(s) consuming relatively low energy on average, or include one or more S-NSSAI(s) having high energy efficiency by considering average energy consumption (or average energy efficiency) for each S-NSSAI for the allowed NSSAI to be transmitted to the UE. Alternatively, the AMF may include only the default subscribed S-NSSAI(s) in the allowed NSSAI for the corresponding UE by considering whether the NES is activated for the UE.

When the AMF does not directly determine the allowed NSSAI in step 302, in step 303a, the AMF may transmit, to the NSSF, the request message (e.g., an Nnssf_NSSelection _Get request message) to acquire the allowed NSSAI. For example, when there is an available NSSF, the AMF may transmit the Nnssf_NSSelection _Get request message to the NSSF.

For example, the request message (e.g., the Nnssf_NSSelection _Get request message) may include the NES status, the subscribed S-NSSAI(s), or the requested NSSAI.

In step 303b, when the message received from the AMF includes the NES status, the NSSF may determine the allowed NSSAI for the corresponding UE by considering one or more of whether the NES is activated for the UE (i.e., the NES status), the subscribed S-NSSAI(s), and the requested NSSAI. For example, for the NES-activated UE, the NSSF may include one or more S-NSSAI(s) consuming relatively low energy on average, or include one or more S-NSSAI(s) having high energy efficiency by considering average energy consumption (or average energy efficiency) for each S-NSSAI for the allowed NSSAI to be transmitted to the UE. Alternatively, the NSSF may include only the default subscribed S-NSSAI(s) in the allowed NSSAI for the corresponding UE when the NES status indicates activated. When the NES status changes from activated to deactivated, the NSSF may include one or more of the S-NSSAI(s) included in the subscribed S-NSSAI(s) in the allowed NSSAl. The NSSF may transmit the response message (e.g., Nnssf_NSSelection _Get response message) to the AMF. The response message (e.g., Nnssf_NSSelection_Get response message) may include the allowed NSSAI and/or the configured NSSAI.

In some cases, steps 303a and 303b may be omitted.

In step 304, the AMF may transmit a UE configuration update message to the RAN. For example, the UE configuration update message may include the allowed NSSAI.

In step 305, the RAN may transmit the message (e.g., the UE configuration update message) received from the AMF to the UE.

When the received message (e.g., the UE configuration update message) includes the allowed NSSAI, the UE may store the allowed NSSAI. The UE may perform the PDU session establishment request only using the S-NSSAI(s) included in the allowed NSSAI (e.g., the PDU session establishment request may include only one of the S-NSSAIs included in the allowed NSSAI) or transmit/receive data.

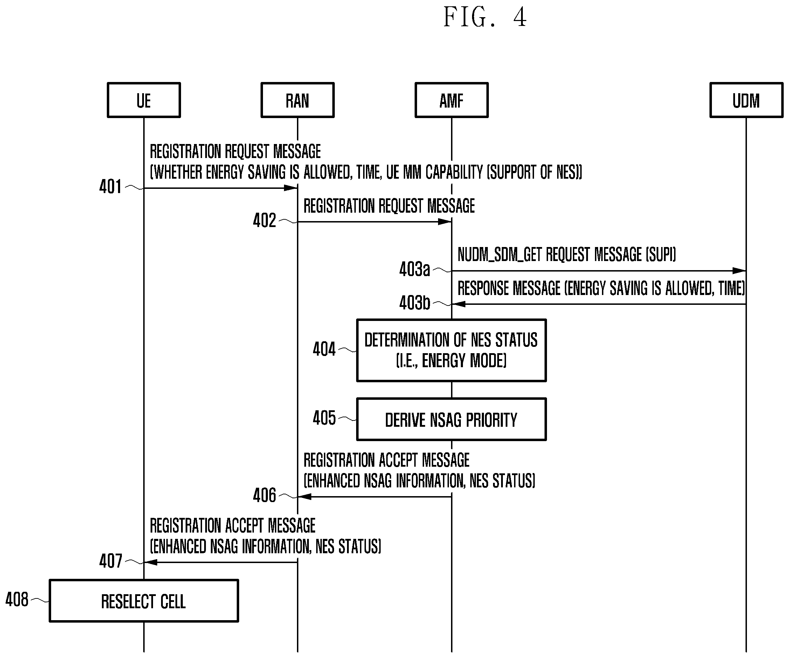

FIG. 4 illustrates a method for deriving and providing NSAG priority in consideration of a NES status in the registration procedure according to an embodiment of the present disclosure.

In step 401, the UE may transmit the access network (AN) message including the registration request message to the RAN. The corresponding message may include at least one of the following pieces of information:
- UE ID: Identifier information of UE. If there is the available 5G-GUTI assigned to the UE by the network, the UE ID may include the 5G-GUTI, and if not,the SUCI may be included;
- Requested NSSAI: It may include the S-NSSAI(s) information requested by the UE.
- Energy saving (ES) allowed (or ES non-allowed) indication: It is the indicator indicating that the ES is allowed (or the indicator indicating that the ES is not allowed). The UE may change the ES status information to allowed when an input allowing the NES is received from a user of the UE, or when information allowing the NES is stored as configuration information in the UE The UE may include the ES allowed or the ES Non-allowed in the registration request message based on its ES status information;
- time: It may include the time information (e.g., period, duration, etc.) that allows the energy saving operation for the UE. For example, it may indicate a specific time (e.g., 1 a.m. to 5 a.m.) of day, etc.; or
- UE 5G MM capability: It indicates the information including the functions supported by the UE. For example, the support of NSAG (i.e., the UE supporting the cell reselection based on the network slice group. etc.) may be included. In addition, for example, support of NES may be included.

In step 402, the RAN may transmit the registration request message received from the UE to the AMF.

In step 403a, the AMF may transmit the message (e.g., a Nudm_SDM_Get request message) requesting the UE subscription information to the UDM, and in step 403b, the AMF may receive the response message including the UE subscription information from the UDM. The UE subscription information received from the UDM may include the ES allowed indication, the time information, and/or the subscribed S-NSSAI(s). The subscribed S-NSSAI(s) may include the information on whether the default S-NSSAI is present for each S-NSSAI.

In step 404, when the registration request message received in step 402 includes the ES allowed indication or when the UE subscription information received in step 403b includes the ES allowed indication, the AMF may determine whether to perform the NES activation for the corresponding UE. When the information received in step 402 or step 403b includes the time information for the NES along with the ES allowed indication, the AMF may perform the NES activation for the corresponding UE within a time window corresponding to the corresponding time information.

When the AMF determines that the NES is activated, the AMF may store the information (e.g., the NES status configured to 'activated') indicating that the NES has been activated for the corresponding UE, internally or in the UE context in the AMF. For the NES-activated UE, the 5G system may perform one or more operations to reduce energy consumption for providing services to the UE(s).

In step 405, when the AMF determines to activate the NES for the corresponding UE and the corresponding UE is the UE that supports the NSAG, the AMF may determine the NSAG priority to be transmitted to the UE by considering whether the UE has activated the NES and the energy consumption (or energy efficiency) for the S-NSSAI(s) associated with the NSAG ID.

The NSAG priority may be composed of one or more <NSAG ID, NSAG priority> pairs. For example, the NSAG priority already provided to the UE may be configured in the form of <NSAG_1, High priority> and <NSAG_2, Low priority>. When the AMF determines to activate the NES for the corresponding UE, the AMF may reconfigure the NSAG priority when an S-NSSAI(s) corresponding to NSAG_2 consume low energy and an S-NSSAI(s) corresponding to NSAG_1 consume high energy. That is, the priority for the NSAG_1 may change to a low priority and the priority for the NSAG_2 may change to a high priority. That is, the AMF may set a higher priority for the NSAG ID associated with low-energy-consuming S-NSSAI(s) in the NSAG priority to be provided to the NES-activated UE.

Alternatively, when the UE MM capability received from the UE includes the support of NES, the AMF may provide the UE with the NES status (e.g., NES activated, NES deactivated) along with the NSAG priority (i.e., enhanced NSAG priority) for each type of NES status (or for each energy Mode). For example, the enhanced NSAG priority provided to the UE may include <NSAG id, priority> pair(s) to be used by the UE when the NES is deactivated, along with <NSAG id, priority> pair(s) to be used by the UE when the NES is activated. When the NES is activated, the <NSAG id, priority> pair(s) to be used by the UE may be configured such that NSAG id associated the S-NSSAI(s) with less energy consumption (or high energy efficiency) is assigned a higher priority than NSAG id associated with the S-NSSAI(s) with high energy consumption. When the NES is deactivated, the <NSAG id, priority> pair(s) to be used by the UE may be determined by considering one or more of the allowed NSSAI, configured NSSAI, and subscribed S-NSSAI(s) of the UE.

In step 406, the AMF may transmit the registration accept message to the RAN. For example, the registration accept message may include at least one of the following pieces of information:
- NSAG information: It may include the NSAG ID-specific associated S-NSSAI(s) information for one or more NSAG ID(s), along with the NSAG priority; or
- Enhanced NSAG information, NES status: When the AMF determines to provide the UE with the NSAG priority based on the NES status (i.e., enhanced NSAG priority), it may include the enhanced NSAG information along with the NES status (e.g., NES activated or NES deactivated) instead of the NSAG information. The enhanced NSAG information may include NSAG ID-specific associated S-NSSAI(s) information for one or more NSAG ID(s) along with the enhanced NSAG priority.

In step 407, the RAN may transmit the registration accept message received from the AMF to the UE. When the UE receives the NSAG priority, the UE may delete the existing NSAG priority and store a new NSAG priority. When the UE receives the enhanced NSAG priority, the UE may delete the existing NSAG priority and store the enhanced NSAG priority. In addition, when the UE receives the NES status, the UE may store the NES status (e.g., 'activated' or 'deactivated').

In step 408, the UE may reselect a cell supporting low-energy-consuming slices based on the received NSAG priority (or enhanced priority).

When the UE supporting the NES receives the NES status configured to "enhanced NSAG priority, activated," the UE may perform the cell reselection using the NSAG priority corresponding to the NES activated within the enhanced NSAG priority.

When the UE receives the NES status configured to "enhanced NSAG priority, deactivated," the UE may perform the cell reselection using the NSAG priority corresponding to the NES deactivated within the enhanced NSAG priority.

When the UE has already received the enhanced NSAG priority and the registration accept message includes only the NES status, the UE may perform the cell reselection using one of NSAG priority sets included in the already received enhanced NSAG priority based on the NES status.

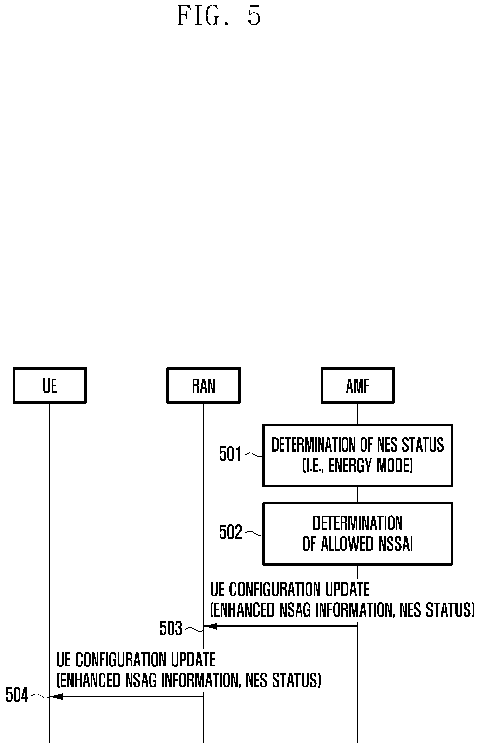

FIG. 5 illustrates a method for providing NSAG priority in a UE configuration information update procedure based on the change in NES status according to an embodiment of the present disclosure.

In step 501, the AMF may determine that the NES is required based on its own configuration information, information received from the NWDAF, signaling from the OAM, signaling from the PCF, etc. When the AMF determines that the NES is required, the AMF may determine UE(s) for which the NES is to be activated. For example, the AMF may determine to activate (or deactivate) the NES for one or more of the UE(s) that has provided the ES allowed indication and additional time information (i.e., the time information allowing the activation of the energy saving) in the registration procedure, or the UE(s) for which the ES allowed indication is included in the subscription information. The AMF may change the NES status to "activated" for the UE(s) that have determined to activate the NES. Alternatively, the AMF may determine to perform the NES deactivation for the UE(s) to which the NES is being applied based on its own configuration information, information received from the NWDAF, signaling from the OAM, signaling from the PCF, etc. The AMF may change the NES status to "deactivated" or delete the NES status itself for the UE(s) that have determined to deactivate the NES.

The AMF may perform one or more of various operations to reduce energy for the UE (i.e., the NES-activated UE) for which the NES status indicates "activated".

In step 502, the AMF may determine whether to update the allowed NSSAI previously provided to the UE (i.e., transmit a new allowed NSSAI to the UE) by considering whether the NES is activated for the UE. In this case, the AMF may exclude some S-NSSAI(s) from the allowed NSSAIs when the NES status for the UE changes to 'activated'. For example, the AMF may exclude the S-NSSAI included in the allowed S-NSSAIs or replace the S-NSSAI with other S-NSSAI by considering the average energy consumption (or average energy efficiency) for each S-NSSAI included in the existing allowed NSSAIs for the NES-activated UE. For example, the AMF may exclude S-NSSAI(s) (e.g., S-NSSAI requiring high frequency band and high speed) with high energy usage from the allowed NSSAIs. Alternatively, the AMF may replace S-NSSAI(s) (e.g., S-NSSAI requiring high frequency band and high speed) with high energy usage with S-NSSAI(s) with low energy usage when the UE supports network slice replacement. That is, the S-NSSAI with low energy usage may be included in the allowed NSSAIs and the S-NSSAI with high energy usage may be excluded.

Alternatively, the AMF may include only the default subscribed S-NSSAI(s) in the allowed NSSAI for the corresponding UE by considering whether the NES is activated for the UE.

When the AMF determines to activate the NES for the corresponding UE and the corresponding UE is the UE that supports the NSAG, the AMF may determine the NSAG priority to be transmitted to the UE by considering whether the UE has activated the NES and the energy consumption (or energy efficiency) for the S-NSSAI(s) associated with the NSAG ID.

The NSAG priority may be composed of one or more <NSAG ID, NSAG priority> pairs. For example, the NSAG priority already provided to the UE may be configured in the form of <NSAG_1, High priority> and <NSAG_2, Low priority>. When the AMF determines to activate the NES for the corresponding UE, the AMF may reconfigure the NSAG priority when an S-NSSAI(s) corresponding to NSAG_2 consume low energy and an S-NSSAI(s) corresponding to NSAG_1 consume high energy. That is, the priority for the NSAG_1 may change to low priority and the priority for the NSAG_2 may change to high priority. That is, the AMF may set a higher priority for the NSAG ID associated with low-energy-consuming S-NSSAI(s)in the NSAG priority to be provided to an NES-activated UE.

Alternatively, when the AMF receives the ES allowed indication from the UE, the AMF may provide the corresponding UE with the NES status (e.g., NES activated, NES deactivated) along with the NSAG priority (i.e., enhanced NSAG priority) based on whether the NES is activated. For example, the enhanced NSAG priority provided to the UE may include <NSAG id, priority> pair(s) to be used by the UE when the NES is deactivated, along with <NSAG id, priority> pair(s) to be used by the UE when the NES is activated. When the NES is activated, the <NSAG id, priority> pair(s) to be used by the UE may be configured such that NSAG id associated the S-NSSAI(s) with less energy consumption (or high energy efficiency) is assigned a higher priority than NSAG id associated with the S-NSSAI(s) with high energy consumption. When the NES is deactivated, the <NSAG id, priority> pair(s) to be used by the UE may be determined by considering one or more of the allowed NSSAI, configured NSSAI, and subscribed S-NSSAI(s) of the UE.

In step 503, the AMF may transmit the UE configuration update message to the RAN. The UE configuration update message may include at least one of the following pieces of information:
- Allowed NSSAI: It may include a network slice identifier(s) allowed to the UE;
- NSAG information: It may include the NSAG ID-specific associated S-NSSAI(s) information for one or more NSAG ID(s), along with the NSAG priority; or
- Enhanced NSAG information, NES status: When the AMF determines to provide the UE with the NSAG priority based on the NES status (i.e., enhanced NSAG priority), it may include the enhanced NSAG information along with the NES status (e.g., NES activated or NES deactivated) instead of the NSAG information. The enhanced NSAG information may include NSAG ID-specific associated S-NSSAI(s) information for one or more NSAG ID(s) along with the enhanced NSAG priority.

In step 504, the RAN may transmit the UE configuration update message received from the AMF to the UE.

When the UE receives a new NSAG priority, the UE may delete the existing NSAG priority and store the new NSAG priority. The UE may reselect a cell supporting the low-energy-consuming slices based on the new NSAG priority.

When the UE receives the NES status configured to "enhanced NSAG priority, activated," the UE may perform the cell reselection using the NSAG priority corresponding to the NES activated within the enhanced NSAG priority.

When the UE receives the NES status configured to "enhanced NSAG priority, deactivated," the UE may perform the cell reselection using the NSAG priority corresponding to the NES deactivated within the enhanced NSAG priority.

When the UE has already received the enhanced NSAG priority and the registration accept message includes only the NES status, the UE may perform the cell reselection using one of NSAG priority sets included in the already received enhanced NSAG priority based on the NES status.

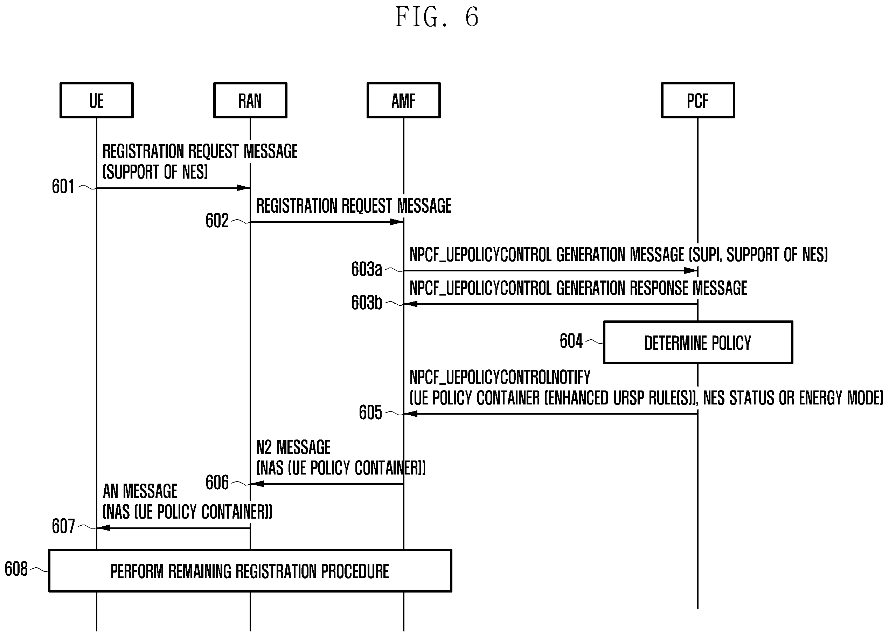

FIG. 6 illustrates a method for providing an enhanced UE route selection policy (URSP) rule in a UE registration procedure according to an embodiment of the present disclosure.

In step 601, the UE may transmit the access network (AN) message including the registration request message to the RAN. The corresponding message may include at least one of the following pieces of information:
- UE ID: Identifier information of UE. If there is the available 5G-GUTI assigned to the UE by the network, the UE ID may include the 5G-GUTI, and if not, the SUCI may be included;
- Requested NSSAI: It may include the S-NSSAI(s) information requested by the UE.
- UE 5G MM capability: It indicates the information including the functions supported by the UE. For example, the UE 5G mm may include the support of NES; or
- time: It may include the time information (e.g., period, duration, etc.) that allows the energy saving operation for the UE. For example, it may indicate a specific time (e.g., 1 a.m. to 5 a.m.) of day, etc.; or

In step 602, the RAN may transmit the registration request message received from the UE to the AMF.

In step 603a, the AMF may transmit a message requesting UE policy (e.g., an Npcf_UEPolicyControl Create message) to the PCF. The corresponding message may include the UE identifier information (e.g., a subscription permanent identifier (SUPI)) and when the message received by the AMF from the UE in step 602 includes the support of NES, the corresponding message may include the support of NES.

In step 603b, the PCF may transmit the response message (e.g., an Npcf_UEPolicyControl create response message) to the AMF.

In step 604, when the UE supports the NES (i.e., in step 603a, when receiving the support of NES), the PCF may include URSP rule(s) (i.e., enhanced URSP rule(s)) with the S-NSSAI for each NES status (or for each energy mode of the UE) of the UE in the UE policy container transmitted to the UE. The existing URSP rule may include, for example, a pair of traffic descriptor (TD) (e.g., connection capability including a traffic category) indicating traffic and a route selection descriptor (RSD) component (e.g., S-NSSAI) to be used for the corresponding TD. The enhanced URSP rule may be composed of, for example, the traffic descriptor (TD) (e.g., the connection capability including the traffic category) indicating the traffic and one or more RSD components to be used for the corresponding TD. For example, the enhanced URSP rule may include the S-NSSAI to be used when the NES status of the UE is set to deactivated for one TD, and the S-NSSAI to be used when the NES status of the UE is set to activated. In this case, the S-NSSAI for the case where the NES status is set to activated may be composed of one or more of the S-NSSAI (i.e., a slice in which the NFs within the network slice are set to a mode in which they consume less energy) configured to consume less network energy. The S-NSSAI for the case where the NES status is set to deactivated may be composed of one or more of the S-NSSAIs suitable for the corresponding TD.

When the UE supports the NES (i.e., when receiving the Support of NES in step 3a), the PCF may determine the NES status (or energy mode) of the UE and include the NES status in the UE policy container transmitted to the UE. When the NES status is determined to be deactivated, the NES status may not be included.

In step 605, the PCF may transmit a UE policy container to the AMF by including the UE policy container in a message (e.g., an Npcf_UEPolicyControlNotify message) transmitted to the AMF.

In step 606, the AMF may transmit a message received from the PCF to the RAN by including the message in the N2 message (NAS message). The N2 message may include the UE policy container.

In step 607, the RAN may transmit a non-access stratum (NAS) message included in the message received from the AMF to the UE by including the non-access stratum in the access network (AN) message.

The UE supporting the NES may store an enhanced URSP rule(s) when the enhanced URSP rule(s) are included in the received UE policy container. The UE may store the NES status when the NES status is included in the UE policy container. When the UE policy container includes the enhanced URSP rule(s) but does not includes the NES status, the UE may determine the NES status as deactivated and store its NES status as deactivated.

In step 608, the remaining UE registration procedures may be performed.

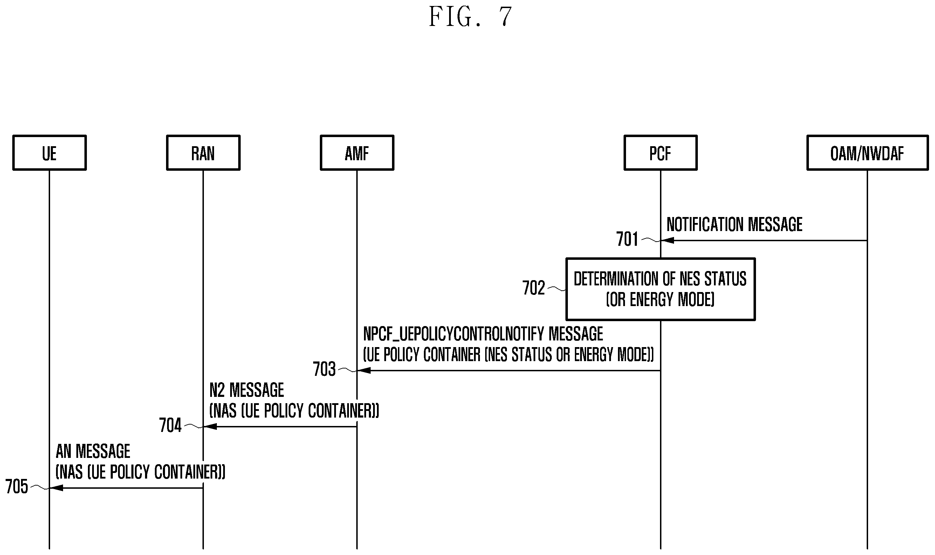

FIG. 7 illustrates a method for transmitting NES status to a UE configured with an enhanced URSP rule in a UE configuration update procedure according to an embodiment of the present disclosure.

In step 701, the PCF may receive, from the OAM/NWDAF, a notification message indicating that the NES has changed to a required state or a notification message indicating that the NES has changed to an unnecessary state.

In step 702, the PCF may determine to activate the NES status for one or more of the UEs supporting the NES (or to deactivate for the UE for which the NES has already been activated), in response to receiving the notification message in step 701 or according to the operator policy.

When the NES status (or energy mode) of the UE has changed, the PCF may include the NES status in the UE policy container transmitted to the UE. Alternatively, when the NES status has changed to deactivated, the PCF may not include the NES status in the UE policy container.

When the UE supports the NES and the corresponding UE has not yet received the enhanced UE policy container, the PCF may include the URSP rule(s) (i.e., enhanced URSP rule(s)) with S-NSSAI for each NES status of the UE (or for each energy mode of the UE) in the UE policy container transmitted to the UE. The existing URSP rule may include, for example, a pair of the TD (e.g., the connection capability including the traffic category) indicating the traffic and the RSD component (e.g., S-NSSAI) to be used for the corresponding TD. The enhanced URSP rule may be composed of, for example, the traffic TD (e.g., the connection capability including the traffic category) indicating the traffic and one or more RSD components to be used for the corresponding TD. For example, the enhanced URSP rule may include the S-NSSAI to be used when the NES status of the UE is set to deactivated for one TD, and the S-NSSAI to be used when the NES status of the UE is set to activated. In this case, the S-NSSAI for the case where the NES status is set to activated may be configured with one or more of the S-NSSAI (i.e., a slice in which the NFs within the network slice are set to a mode in which they consume less energy) configured to consume less network energy. The S-NSSAI for the case where the NES status is set to deactivated may be composed of one or more of the S-NSSAIs suitable for the corresponding TD.

When the UE supports the NES and the corresponding UE has already received the enhanced UE policy container, the PCF may not include the enhanced URSP rule(s) in the UE policy container.

In step 703, the PCF may transmit the UE policy container by including the UE policy container in a message (e.g., an Npcf_UEPolicyControlNotify message) transmitted to the AMF.

In step 704, the AMF may transmit a message received from the PCF to the RAN by including the message in the N2 message (NAS message).

In step 705, the RAN may transmit the NAS message included in the message received from the AMF to the UE by including the NAS message in the AN message.

The UE supporting the NES may store the enhanced URSP rule(s) when the enhanced URSP rule(s) are included in the received UE policy container. The UE may store the NES status when the NES status is included in the UE policy container. When the UE policy container includes the enhanced URSP rule(s) but does not includes the NES status, the UE may determine the NES status as deactivated and store its NES status as deactivated.

The operation sequences of FIGS. 2 to 7 may change depending on the circumstances. In addition, some operations of FIGS. 2 to 7 may be omitted from illustration but still performed, or two or more steps may be combined and performed. Furthermore, some operations of different drawings may be combined and performed.

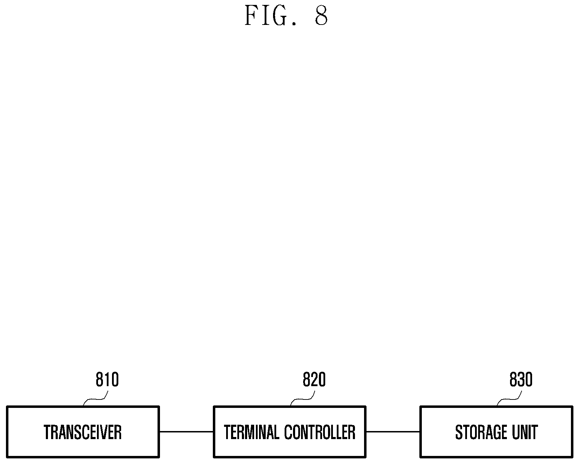

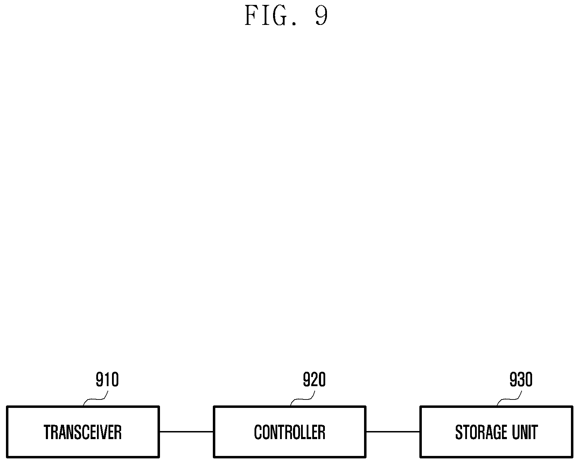

The methods and/or embodiments proposed in the present disclosure may be performed by the UE of FIG. 8 and the network entity of FIG. 9.

FIG. 8 is a block diagram illustrating a structure of a terminal according to an embodiment of the present disclosure. Of course, the terminal is not limited to the above example, and the terminal may include fewer or more components than those illustrated in FIG. 8.

Referring to FIG. 8, the terminal may include a transceiver 810, a controller 820, and a storage unit 830. In the present disclosure, the controller may be defined as a circuit, an application-specific integrated circuit, or at least one processor. The transceiver 810 may transmit and receive signals to and from other network entities. The transceiver 810 may receive, for example, system information from a base station, and receive a synchronization signal or a reference signal. The controller 820 may control the overall operation of the terminal according to an embodiment proposed in the present disclosure. For example, the controller 820 may control a signal flow between each block to perform operations according to the flowchart described above. The storage unit 830 stores data such as basic programs, application programs, and configuration information for the operation of the terminal. The storage unit 830 may store at least one of the information transmitted and received through the transceiver 810 and the information generated by the controller 820. The storage unit 830 may be configured as storage media, such as a ROM, a RAM, a hard disk, a CD-ROM, or a DVD, or a combination of the storage media. Furthermore, the storage unit 830 may be composed of a plurality of memories.

FIG. 9 is a diagram illustrating a structure of a network entity performing a network function according to an embodiment of the present disclosure. For example, the network entity of FIG. 9 may be a network node. For example, the network entity of FIG. 9 may be one of the RAN, AMF, SMF, PCF, NWDAF, NSSF, UDM, or OAM described above through embodiments of the present disclosure.

Referring to FIG. 9, the network entity performing the network function may include a transceiver 910, a controller 920, and a storage unit 930. In the present disclosure, the controller may be defined as a circuit, an application-specific integrated circuit, or at least one processor.

The transceiver 910 may transmit and receive signals to and from other network entities. The transceiver 910 may transmit and receive, for example, signals or messages to and from the AMF that is a network entity that manages access and mobility of a terminal to an access network.

The controller 920 may control the overall operation of the network entity performing the network function according to the embodiments proposed in the present disclosure. For example, the controller 920 may control a signal flow between each block to perform operations according to the flowchart described above.

The storage unit 930 may store at least one of the information transmitted and received through the transceiver 910 and the information generated by the controller 920.

Meanwhile, the order of description in the drawings describing the method of the present disclosure does not necessarily correspond to the order of execution, and the order of precedence may be changed or executed in parallel. Alternatively, the drawings describing the method of the present disclosure may omit some components and include only some components, without departing from the essence of the present disclosure.

Meanwhile, the embodiments of the present disclosure disclosed in this specification and drawings are merely specific examples presented to easily describe the technical contents of the present disclosure and to help understanding of the present disclosure, and are not intended to limit the scope of the present disclosure. That is, it will be apparent to a person having ordinary skill in the art to which the present disclosure pertains that other modifications based on the technical scope of the present disclosure are possible. In addition, each embodiment may be combined with each other and operated as needed. For example, parts of all embodiments of the present disclosure may be combined with each other to operate the base station and the terminal.

## Claims

1. A method performed by a first network entity corresponding to an access and mobility management function (AMF) in a wireless communication system, the method comprising:
receiving user equipment (UE) subscription information from a second network entity corresponding to a unified data management (UDM);
receiving a request message for network energy saving (NES) from a UE;
determining NES activation for the UE based on at least one of the UE subscription information and the request message; and
transmitting NES-related information to the UE,
wherein the request message includes information on whether energy saving is allowed for the UE.

2. The method of claim 1, wherein the NES activation is determined for the UE for which identified energy saving is allowed based on the information on whether the energy saving is allowed.

3. The method of claim 1, wherein the UE subscription information includes information on whether the energy saving is allowed for each UE and information on a time during which the energy saving is allowed for each UE,
one or more UEs to which the NES activation is applied are determined based on the information on whether the energy saving is allowed for each UE, and
the NES activation is applied to the one or more UEs in a time window identified based on the information on the time.

4. The method of claim 1, further comprising:
determining a network slice access stratum group (NSAG) priority for the UE; and
transmitting information on the determined NSAG priority to the UE.

5. The method of claim 4, wherein the NSAG priority is set for each NES status, and the information on the NSAG priority includes the NSAG priority and the NES status.

6. The method of claim 1, wherein the NES-related information includes allowed network slice selection assistance information (NSSAI).

7. The method of claim 1, further comprising:
receiving a UE route selection policy (URSP) rule for each NES status of one or more UEs from a third entity corresponding to a policy control function (PCF),
wherein the URSP rule include single-network slice selection assistance information (S-NSSAI) to be used when an NES status is deactivated for one traffic descriptor and S-NSSAI to be used when an NES status is activated for the one traffic descriptor.

8. A method performed by a user equipment (UE) in a wireless communication system, the method comprising:
transmitting a request message for network energy saving (NES) to a first network entity corresponding to an access and mobility management function (AMF); and
receiving NES-related information from the first network entity,
wherein the request message includes information on whether energy saving is allowed for the UE, and
whether the NES is activated for the UE is determined based on the request message.

9. The method of claim 8, wherein the request message further includes information on a time during which the energy saving is allowed for the UE and a UE identifier, and
the NES activation for the UE is applied in a time window identified based on the information on the time.

10. The method of claim 8, wherein the NES-related information includes a network slice access stratum group (NSAG) priority and an NES status corresponding to the NSAG priority.

11. The method of claim 8, wherein the NES-related information includes allowed network slice selection assistance information (NSSAI), and
PDU session establishment is requested for the allowed NSSAI.

12. A first network entity corresponding to an access and mobility management function (AMF) in a wireless communication system, the first network entity comprising:
a transceiver; and
a controller,
wherein the controller is configured to:
receive user equipment (UE) subscription information from a second network entity corresponding to a unified data management (UDM);
receive a request message for network energy saving (NES) from the UE;
determine NES activation for the UE based on at least one of the UE subscription information and the request message; and
transmit NES-related information to the UE, and
wherein the request message includes information on whether energy saving is allowed for the UE.

13. The first network entity of claim 12, wherein the UE subscription information includes the information on whether the energy saving is allowed for each UE and information on a time during which the energy saving is allowed for each UE,
one or more UEs to which the NES activation is applied are determined based on the information on whether the energy saving is allowed for each UE, and
the NES activation for the one or more UEs is applied in a time window identified based on the information on the time.

14. The first network entity of claim 1, wherein the controller is further configured to:
determine a network slice access stratum group (NSAG) priority for the UE; and
transmit information on the determined NSAG priority to the UE.

15. A user equipment (UE) in a wireless communication system, comprising:
a transceiver; and
a controller,
wherein the controller is configured to:
transmit a request message for network energy saving (NES) to a first network entity corresponding to an access and mobility management function (AMF); and
receive NES-related information from the first network entity, and
wherein the request message includes information on whether energy saving is allowed for the UE, and
whether the NES is activated for the UE is determined based on the request message.
